# EUROPÄISCHE PATENTANMELDUNG

(11) **EP 3 689 500 A1**
(43) Veröffentlichungstag der Anmeldung: **05.08.2020**
(21) Anmeldenummer: 19154417.0
(22) Anmeldetag: 30.01.2019
(51) Int. Cl.: B22F 3/105, B22F 5/00, B22F 5/04, B22F 5/10, B33Y 80/00, B33Y 10/00

(54) **BAUTEIL, INSBESONDERE FÜR EINE THERMISCHE STRÖMUNGSMASCHINE, UND VERFAHREN ZUM HERSTELLEN EINES DERARTIGEN BAUTEILS**

(71) Anmelder: Siemens Aktiengesellschaft, 80333 München (DE)
(72) Erfinder: Farahbod-Sternahl, Lena, 12167 Berlin (DE); Felsmann, Christian, 16341 Panketal (DE); Glass, Dennis, 10589 Berlin (DE); Grodzki, Jacek, 14089 Berlin (DE); Herfurth, Robert, 16321 Bernau bei Berlin (DE); Hoefener, Lars, 13156 Berlin (DE); Hornung, Bernd, 88499 Riedlingen (DE); Rühmer, Tobias Thomas, 12487 Berlin (DE); Thomas, Eric, 10369 Berlin (DE)

(57) **Zusammenfassung**

Die Erfindung betrifft ein Bauteil (10), insbesondere für eine thermische Strömungsmaschine, umfassend zumindest einen Bestandteil, vorzugsweise mehrere Bestandteile, das eine durch selektives Laserschmelzen hergestellte massive Umhüllung (44, 76, 96) aufweist. Weiter betrifft die Erfindung ein Verfahren (101) zum Herstellen eines derartigen Bauteils, umfassend die Schritte:
a) Herstellen (100) des Bauteils durch selektives Laserschmelzen mit zumindest einem Bestandteil, das eine lasergeschmolzene Umhüllung aufweist und
b) thermisches Behandeln (110) des Bauteils (10) nach dem Abschluss des selektiven Laserschmelzens. Um nun die Herstellungsdauer zu reduzieren und die Herstellungskosten des selektiven Laserschmelzens zu verringern, ist zumindest ein Bestandteil (40) des Bauteils (10) nicht mehr massiv aus einem Material mit konstanter Dichte ausgestaltet, sondern umfasst eine Umhüllung (44, 76, 96), deren von der Umhüllung (44, 76, 96) umgebenes Inneres (46, 78, 94) zwar das gleiche Material der Umhüllung (44, 76, 96) aufweist, jedoch in einer anderen metallurgischen Struktur.

## Beschreibung

Die Erfindung betrifft ein Bauteil, insbesondere für eine thermische Strömungsmaschine, umfassend zumindest einen Bestandteil, vorzugsweise mehrere Bestandteile, das eine durch selektives Laserschmelzen (SLM) hergestellte massive Umhüllung aufweist. Weiter betrifft die Erfindung ein Verfahren zum Herstellen eines derartigen Bauteils, umfassend die Schritte:
a) Herstellen des Bauteils durch selektives Laserschmelzen mit zumindest einem Bestandteil, welcher eine durch laserschmelzen hergestellte massive Umhüllung aufweist und
b) thermisches Behandeln des Bauteils nach dem Abschluss des selektiven Laserschmelzens.

Aus dem jüngeren Stand der Technik ist es bekannt, Bauteile einer Strömungsmaschine, beispielsweise Turbinenschaufeln oder Hitzeschilder von Gasturbinen, mittels selektiven Laserschmelzens herzustellen. Dabei werden die betreffenden Bauteile gemäß eines 3D-Druck-Prinzips hergestellt, indem in einem Pulverbett die metallischen Pulverpartikel der obersten Schicht mittels eines Laserstrahls aufgeschmolzen und miteinander sowie mit der darunterliegenden Schicht bereits verschmolzener Pulverpartikel verschmolzen werden, um so schichtweise durch eine große Anzahl derartig verbundener Schichten einen räumlichen Körper mit beliebig komplexer Struktur aufzubauen. Als Pulverpartikel werden in der Regel metallische Pulver ohne Zusatz eines Binders verwendet, sodass während des Laserschmelzens die vom Laser erreichten Pulverpartikel des Metallpulvers vollständig aufgeschmolzen werden.

Aufgrund der Verwendung der derartig hergestellten Bauteile, beispielsweise in einer Gasturbine, sind diese zumeist mit Hohlräumen versehen, durch welche ein Kühlmedium, zumeist Kühlluft, geführt werden kann, damit die dem Heißgas der Gasturbine ausgesetzten Elemente der Bauteile dauerhaft den hohen Temperaturen des Heißgases standhalten können. Andere Bestandteile der Bauteile, welche beispielsweise zur Befestigung des Bauteils erforderlich sind, sind in der Regel dagegen massiv ausgeführt. Um diese Bestandteile massiv herzustellen ist es erforderlich, dass der Laser während des 3D-Drucks die gesamte betreffende Fläche des betreffenden Bestandteils für jede erforderliche Schicht umschmelzt und dabei sukzessive die Pulverpartikel miteinander zu einer Schicht und diese Schicht mit der jeweils darunterliegenden Schicht verschmelzt.

Da sich die Herstellung von derartigen Bauteilen weiterhin recht kosten- und zeitintensiv darstellt, liegt der Erfindung die Aufgabe zugrunde, ein Bauteil, insbesondere das einer thermischen Strömungsmaschine, bereitzustellen, dessen Herstellungskosten und Herstellungsdauer weiter reduziert sind. Weitere Aufgabe der Erfindung ist die Bereitstellung eines dafür geeigneten Verfahrens.

Die Aufgabe hinsichtlich des Bauteils wird durch die Merkmale des unabhängigen Anspruchs 1 und hinsichtlich des Verfahrens zur Herstellung des Bauteils durch die Merkmale des unabhängigen Patentanspruchs 8 gelöst.

Vorteile und Ausgestaltungen der Erfindung, die einzeln oder in Kombination miteinander einsetzbar sind, sind Gegenstand der Unteransprüche.

Bezüglich des Bauteils wird vorgeschlagen, dass es zumindest ein Bestandteil, vorzugsweise mehrere Bestandteile umfasst, die ein von einer durch selektives Laserschmelzen hergestellten massiven Umhüllung zumindest teilweise, vorzugsweise größtenteils, insbesondere vollständig umgebenes Inneres aufweist, welches Innere ein Metallpulver enthält und/oder welches Innere zumindest teilweise nicht lasergeschmolzen, sondern gesintert ist. Bezüglich des Verfahrens zur Herstellung eines derartigen Bauteils werden die folgenden Schritte vorgeschlagen:
a) Herstellen des Bauteils durch selektives Laserschmelzen mit zumindest einem Bestandteil, welches ein von einer lasergeschmolzenen massiven Umhüllung zumindest teilweise, vorzugsweise größtenteils, insbesondere vollständig umgebenes Inneres aufweist,
b) thermisches Behandeln des Bauteils nach dem Abschluss des selektiven Laserschmelzen, wobei nach Abschluss des selektiven Laserschmelzens und vor der Durchführung des Schrittes b) das von der Umhüllung zumindest teilweise, vorzugsweise größtenteils, insbesondere vollständig umgebene Pulver zumindest in signifikantem Umfang, vorzugsweise vollständig, im Inneren belassen wird und dass während der Durchführung des Schrittes b) dem Bauteil derart viel Energie zugeführt wird, dass das darin belassene Pulver währenddessen vorzugsweise vollständig gesintert wird.

Der Erfindung liegt die Erkenntnis zugrunde, dass die bisher massiven Bestandteile, wie sie beispielsweise zur Befestigung der Bauteile an übergeordneten Tragstrukturen erforderlich sind, nicht mehr vollständig massiv, sondern alternativ ausgestaltet sind. Anstelle einer massiven Befestigungsregion wird mit der Erfindung vorgeschlagen, dass dieser Bestandteil des Bauteils lediglich eine massive Umhüllung für ein davon umgebenes Inneres aufweist. Das Innere kann einerseits als Raum verstanden werden, in welchem das bei der Herstellung verwendete, zumindest zwischenzeitlich, Pulver verbleibt. Das Innere ist sodann größtenteils oder gar vollständig mit Pulver ausgefüllt. Unter "größtenteils" wird verstanden, dass nicht nur Pulverreste an den nach innen weisenden Flächen der Umhüllung oder in schwer zugänglichen Ecken des Inneren verbleiben, sondern dass das nicht-lasergeschmolzene Innere hauptsächlich von Pulver ausgefüllt ist. Andererseits kann das Innere als ein zumindest hauptsächlich ausgefüllter Raum verstanden werden, dessen Material zumindest teilweise, vorzugsweise vollständig gesintert ist.

Mithilfe derartig gestalteter Bestandteile können Bauteile, und insbesondere Bauteile einer thermischen Strömungsmaschine, signifikant schneller hergestellt werden im Vergleich zu selektiv lasergeschmolzenen Bauteilen, bei denen korrespondierende Bestandteile wie bisher massiv ausgestaltet waren. Auch sind erfindungsgemäße Bauteile leichter und weisen oftmals einen etwas geringeren Bedarf an Rohmaterial zur Herstellung auf. Dies reduziert die Herstellungskosten weiter. Außerdem kann durch den Pulvereinschluss die akustische und/oder mechanische Dämpfung des Bauteils beeinflusst werden, ohne dessen äußere Gestalt zu verändern. Letzteres wäre beispielsweise insbesondere bei Turbinenlaufschaufel oder auch Brennkammer-Bauteilen vorteilhaft. Besonders geeignete Bestandteile von Bauteilen, in denen die vorgeschlagene Maßnahme angewendet werden kann, sind die zumeist in Form von Festlagern oder Loslagern ausgestalteten Befestigungsbereiche, beispielsweise Haken oder Schienen, oder auch Randbereiche des Bauteils selbst. Andere Bereiche des Bauteils können ebenfalls dergleichen ausgestaltet sein, sofern nicht andere lokale Anforderungen dies verhindern.

Im Rahmen dieser Erfindung werden unter den Begriffen "Bestandteil" bzw. "Bereich" Anteile eines Ganzen (des Bauteils) verstanden. Weiter wird unter dem "Inneren" ein im Wesentlichen ausgefülltes Volumen verstanden, welches im Betrieb nicht kühlmitteldurchströmt ist.

Selbstverständlich ist es möglich, dass das von der Umhüllung umgebene Innere zumindest teilweise oder vollständig gesintert ist. In beiden Fällen wird das Bauteil, in dessen Inneren das Pulver in signifikantem Umfang vorhanden ist, nach Abschluss des Laserschmelz-Herstellungsprozesses einer thermischen Behandlung unterzogen. In der Regel spricht man in einem ersten Wärmebehandlungsschritt von einem Glühen des Bauteils zur Reduzierung der Eigenspannungen (Spannungsarmglühen). Erfindungsgemäß wird dem Bauteil währenddessen eine derartige Energiemenge zugeführt, dass das im Bauteil belassene Pulver vorzugsweise vollständig gesintert wird. Das gesinterte Innere kann zu einer höheren Steifigkeit bzw. Festigkeit des betreffenden Bestandteils beitragen und ein unkontrollierter Verlust von Pulver für den Fall, dass aufgrund von äußeren Einflüssen oder Verschleißerscheinungen die Umhüllung undicht werden sollte, ist ausgeschlossen.

Üblicherweise wird unter Sintern ein Verfahren zur Herstellung oder Veränderung von Werkstoffen verstanden, bei dem die Temperaturen unterhalb der Schmelztemperatur des Werkstoffes bleiben. So wird das Pulver lediglich teilweise aufgeschmolzen und die Partikel agglomerieren.

Sofern zur Erreichung einer verbesserten Steifigkeit des betreffenden Bestandteils erforderlich, kann im Inneren zudem ein durch selektives Laserschmelzen hergestelltes Gitter vorgesehen sein, welches mit der Umhüllung simultan hergestellt wurde. Das restliche Volumen des von der Umhüllung umgebene Inneren ist dann hauptsächlich mit Pulver aufgefüllt oder gesintert. Das Gitter dient zur wechselseitigen Abstützung von einzelnen Wandabschnitten der Umhüllung, was die Steifigkeit der Umhüllung weiter positiv beeinflusst. Vorzugsweise weist das Innere eine Steifigkeit von etwa 5 % bis etwa 90 % eines materialidentischen Vergleichsbauteils auf, dessen korrespondierender Bestandteil massiv ausgestaltet ist.

Gemäß einer weiteren vorteilhaften Ausgestaltung umfasst das Bauteil einen Grundkörperabschnitt zur Erfüllung einer Grundfunktion des Bauteils sowie einen Randbereich als erfindungsgemäßen Bestandteil, wobei der Randbereich an den Grundkörperabschnitt monolithisch angrenzt bzw. darin übergeht. Der bzw. die Randbereiche sind entweder zur lösbaren Befestigung des Bauteils an einer Tragstruktur vorgesehen und/oder zur Bildung eines Dichtungspartners einer Dichtungsanordnung ausgestaltet. Mit anderen Worten: Die Verwendung der Umhüllung und des davon umschlossenen gesinterten bzw. in Pulverform vorliegenden Inneren im Bauteil kann an denjenigen Stellen des Bauteils erfolgen, die eine entsprechende Eignung dafür aufweisen und bei denen die verbleibende Umhüllung die erforderliche Mindeststeifigkeit für das Bauteil an sich bereitstellen kann.

Wenn beispielsweise das Bauteil als Turbinenleitschaufel ausgestaltet ist und einen hakenförmigen Schaufelfuß zur Befestigung der Turbinenschaufel an einem Turbinenschaufelträger, eine Plattform sowie ein aerodynamisch gekrümmtes Schaufelblatt umfasst, so stellt zumindest das aerodynamisch gekrümmte Schaufelblatt den Grundkörperabschnitt des Bauteils dar. Der eine oder die mehreren Haken des Schaufelfußes oder Schaufelkopfes hingegen stellen jeweils einen Randbereich dar, welcher monolithisch an den Grundkörperabschnitt angrenzt, wobei die betreffenden Haken jeweils als Randbereiche die voran beschriebenen Bestandteile darstellen und somit ein von einer Umhüllung umgebenes Inneres aufweisen können. Die zwischen dem aerodynamisch gekrümmten Schaufelblatt und dem Schaufelfuß bzw. Schaufelkopf vorgesehenen Plattformen können darüber hinaus - je nach Ausgestaltung - einerseits als Grundkörperabschnitt oder andererseits als Randbereich verstanden werden. Insbesondere eine solch gestaltete Turbinenschaufel kann in signifikant kürzerer Zeit und mit geringerem Pulvereinsatz hergestellt werden.

Alternativ könnte das Bauteil auch als Turbinenlaufschaufel, als Hitzeschild einer Heißgaspfadbegrenzung radial außerhalb von rotierenden Laufschaufeln, als Hitzeschild einer Brennkammer oder als weiteres Brennkammer-Bauteil ausgestaltet sein. Unter einem weiteren Brennkammer-Bauteil wird nicht allein ein Brenner verstanden, sondern auch andere Bauteile der Brennkammer wie beispielsweise ein den Brenner tragenden Brennereinsatz, ein Brennkammer-Resonator oder sonstige additiv fertigbare Strukturelemente der Brennkammer.

Weiter bevorzugt umfasst der betreffende Randbereich zwei parallele Außenflächen der Umhüllung, deren senkrechter Abstand zwischen 0,9 mm und 35 mm liegt. Dies sind typische Abmaße von Bauteilregionen, die sich insbesondere für die von der Erfindung vorgeschlagene Ausgestaltung eignen. Dabei weist die Umhüllung eine senkrecht zur Außenfläche erfassbare Wanddicke auf, die in der Regel zwischen 0,3 mm bei insgesamt eher dünneren Randbereichen und 5 mm bei insgesamt eher dickeren Randbereichen liegt.

Im Folgenden wird die Erfindung und werden weitere Merkmale sowie Eigenschaften und Vorteile anhand der in den Figuren dargestellten Ausführungsbeispiele näher beschrieben und erläutert. Darin zeigen schematisch:
- Figur 1: eine perspektivische Darstellung einer Turbinenschaufel als ein erstes Ausführungsbeispiel eines Bauteils,
- Figur 2: einen Plattformrand einer weiteren Turbinenschaufel als zweites Ausführungsbeispiel,
- Figur 3: einen Querschnitt durch ein Hitzeschild als ein drittes Ausführungsbeispiel eines erfindungsgemäßen Bauteils,
- Figur 4: einen Querschnitt durch einen Brenner als viertes Ausführungsbeispiel eines erfindungsgemäßen Bauteils,
- Figur 5: eine Turbinenlaufschaufel als fünftes Ausführungsbeispiel eines erfindungsgemäßen Bauteils und
- Figur 6: ein Verfahren zur Herstellung eines derartigen Bauteils.

In allen Figuren sind identische Merkmale mit den gleichen Bezugszeichen versehen.

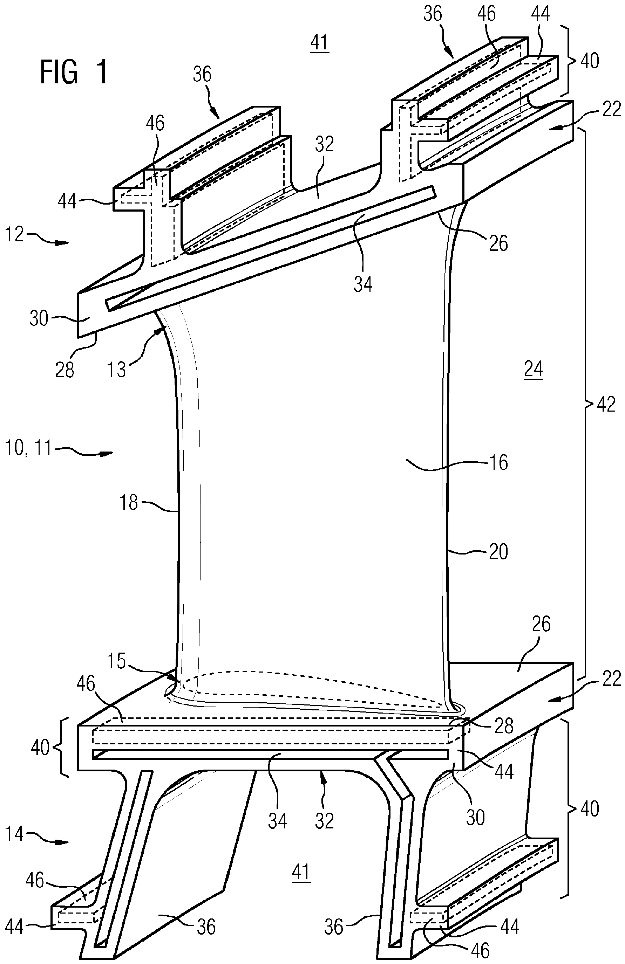

Figur 1 zeigt als erstes Ausführungsbeispiel eines erfindungsgemäßen Bauteils 10 in einer perspektivischen Darstellung eine Turbinenschaufel 11. Die Turbinenschaufel 11 umfasst einen Schaufelfuß 12 sowie einen Schaufelkopf 14, zwischen denen sich im Wesentlichen ein aerodynamisch gekrümmtes Schaufelblatt 16 erstreckt. Quer dazu erstreckt sich das Schaufelblatt 16 von einer Anströmkante 18 zu einer Hinterkante 20. Sowohl an einem fußseitigen Ende 13 des Schaufelblatts 16 als auch an dessen kopfseitigen Ende 15 ist jeweils eine Plattform 22 vorgesehen, die einen dazwischen angeordneten Strömungspfad 24 für Heißgas begrenzt. Dazu weist jede Plattform 22 eine dem Heißgas-Strömungspfad 24 zugewandte Oberfläche 26 auf. Die Oberfläche 26, nachfolgend als erste Oberfläche 26 bezeichnet, endet seitlich an einem Plattformrand 28. Dieser Plattformrand 28 kann - wie dargestellt - als Kante ausgeführt sein. An den Plattformrand 28 schließt sich eine Seitenfläche 30 an, welche quer zur ersten Oberfläche 26 orientiert ist.

Der ersten Oberfläche 26 gegenüberliegend ist auf der kühleren Seite der Plattform 16 eine zweite Oberfläche 32 angeordnet. Von dieser stehen schienenförmige Haken 36 zur Befestigung der Turbinenschaufel 11 an einen nicht weiter dargestellten Schaufelträger ab. Die am Schaufelkopf 14 der Turbinenschaufel 11 angeordneten Haken 36 dienen bekanntermaßen zur Befestigung eines ebenfalls nicht weiter dargestellten Dichtrings.

Bei der Verwendung der gezeigten Turbinenschaufel 11 innerhalb einer Gasturbine bilden mehrere, in einem Kranz angeordnete Turbinenschaufeln 11 eine Leitschaufelreihe, wobei dann die Seitenflächen 30 unmittelbar benachbarter Turbinenschaufeln 11 jeweils spaltbildend einander gegenüberliegen. Für derartige Anordnungen sind dann nur diejenigen Plattformränder 28 der Plattformen 22 besagte Dichtungspartner, die in Umfangsrichtung gesehen die erste Oberfläche 26 begrenzen.

Um den von zwei unmittelbar gegenüberliegenden Seitenflächen 30 benachbarten Turbinenschaufeln 11 begrenzten Spalt weitestgehend abzudichten, sind in den Seitenflächen 30 Dichtnuten 34 vorgesehen, in denen ein nicht weiter gezeigtes plattenförmiges Dichtelement sitzt. Die beiden Bauteile 10 und das Dichtelement bilden sodann eine Dichtungsanordnung, welche verhindert, dass das im Strömungspfad 24 geführte Heißgas in andere, jenseits der Plattformen 22 liegende, kühlere Bereiche 41 hinausströmen kann. Jede Dichtnut 34 erstreckt sich entlang des Plattformrandes 28, jedoch unter einem geringen Abstand dazu.

Bisher wurden derartige Turbinenschaufeln 11 im Feingussverfahren hergestellt. Aufgrund neuartiger Herstellverfahren können diese künftig auch mittels selektiven Laserschmelzens hergestellt werden.

Um nun die Herstellungsdauer beim selektiven Laserschmelzen zu reduzieren und die Herstellungskosten zu verringern, sind ein oder mehrere Bestandteile 40 der Turbinenschaufel 11 nicht mehr massiv aus einem Material mit konstanter Dichte ausgestaltet. Die betreffenden Bestandteile 40, die vorzugsweise abseits eines Grundkörperabschnitts 42 oder bestenfalls an diesem angrenzend angeordnet sind, umfassen erfindungsgemäß jeweils eine Umhüllung 44, deren von der Umhüllung 44 umgebenes Inneres 46 zwar das gleiche Material der Umhüllung 44 aufweist, jedoch in einer anderen metallurgischen Struktur. Damit weist das Innere 46 eine geringere Dichte als dessen Umhüllung 44 auf. Das Innere 46 ist entweder ein Metallpulver und/oder zumindest teilweise gesintert, während die Umhüllung 44 durch selektives Laserschmelzen massiv ausgestaltet ist. Vorzugsweise umgibt die Umhüllung 44 das Innere 46 vollständig. Möglich ist dennoch, dass die Umhüllung 44 das Innere nicht vollständig, sondern nur teilweise, vorzugsweise jedoch größtenteils umgreift, sodass nach Abschluss des selektiven Laserschmelzens ein oder mehrere vergleichsweise kleine Öffnungen in der Umhüllung 44 vorhanden sein können. Dies ist insbesondere von Vorteil, wenn eine akustische Dämpfung mit dem Bauteil zusätzlich erzielt werden soll.

Gemäß dem ersten Ausführungsbeispiel stellt bei einem als Turbinenschaufel 11 ausgestalteten Bauteil 10 das aerodynamisch gekrümmte Schaufelblatt 16 den Grundkörperabschnitt 42 dar. Die ein oder mehreren schienenförmigen Haken 36 des Schaufelfußes 12 stellen dagegen einen Randbereich des Bauteils 10 dar, welcher in den Grundkörperabschnitt 42 übergeht. Die in Figur 1 dargestellten Haken 36 sind aufgrund ihrer Erstreckung sowohl in radialer Richtung als auch in Axialrichtung, jeweils bezogen auf die Maschinenachse der Strömungsmaschine, als Festlager ausgestaltet. Die betreffenden Haken 36 sind die voran beschriebenen Bestandteile 40 und weisen somit ein von einer Umhüllung 44 umgebenes Inneres 46 auf.

Die Plattform 22 zwischen aerodynamisch gekrümmtem Schaufelblatt 16 und Schaufelfuß 12 könnte einerseits zum Grundkörperabschnitt 42 verstanden werden, da bekanntermaßen diese hauptsächlich zur Heißgaspfadbegrenzung dienen. Weil jedoch die Plattformränder benachbarter Turbinenschaufeln 11 jeweils Dichtungspartner einer gemeinsamen Dichtungsanordnung darstellen, können diese Randbereiche andererseits zu den erfindungsgemäßen Bestandteilen 40 zugerechnet werden.

Wie dargestellt kann auch an einem Rand der Plattform 22 neben der Dichtnut 34 ein erfindungsgemäß ausgestalteter Bestandteil 40 mit einer massiven Umhüllung 44 angeordnet sein, der ein gesintertes Inneres 46 umgibt.

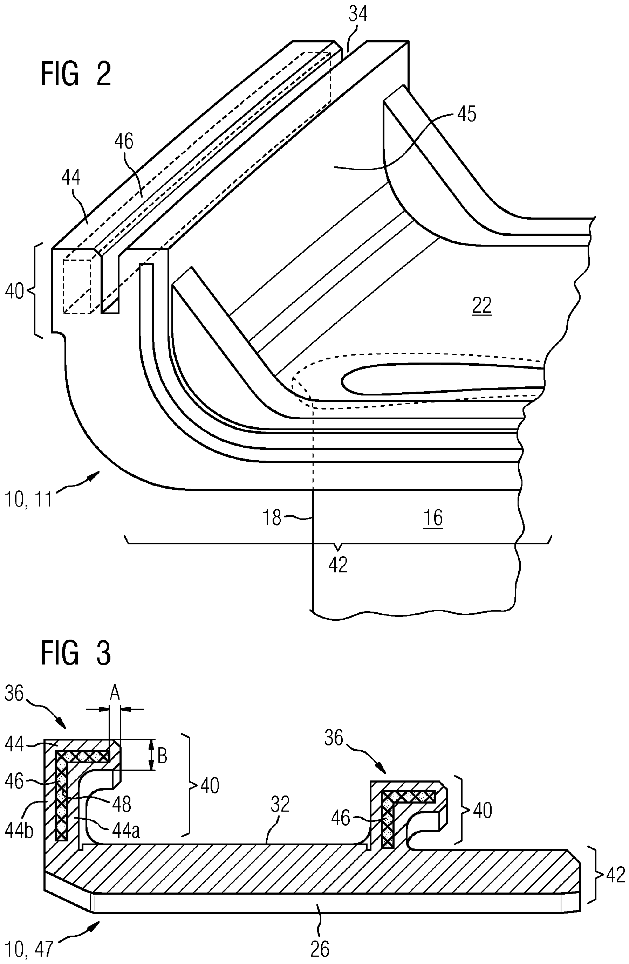

Figur 2 zeigt einen weiteren Plattformrand 45 einer weiteren Turbinenschaufel 11 als zweites Ausführungsbeispiel eines Bauteils 10, der parallel zu der Dichtnut 34 ein Bestandteil 40 umfasst, in der eine durch selektives Laserschmelzen hergestellte Umhüllung 44 ein Inneres 46 umgibt. Gemäß dem hier dargestellten Ausführungsbeispiel ist das im Inneren 46 der Umhüllung 44 vorhandene Material vollständig gesintert, wobei die Umhüllung 44 das Innere 46 vollständig umgibt.

Den Querschnitt durch ein Hitzeschild 47 als ein drittes Ausführungsbeispiel eines erfindungsgemäßen Bauteils 10 zeigt Figur 3. Das Hitzeschild 47 ist im wesentlichen plattenförmig ausgestaltet und dient zur Führung eines Heißgases, beispielsweise innerhalb einer Brennkammer einer Gasturbine oder beispielsweise innerhalb der Turbine. Im letzteren Fall liegt das Hitzeschild 47 dann den Schaufelspitzen von rotierenden Turbinenlaufschaufeln gegenüber.

In analoger Weise zu den Plattformen 22 der Turbinenschaufel 11 besitzt das Hitzeschild 47 eine erste, dem Heißgas zugewandte Oberfläche 26 sowie eine zweite, der Oberfläche 26 gegenüberliegenden, kühlere Oberfläche 32. Auf der kühleren Seite des Hitzeschildes 47 sind zwei axial beabstandete Haken 36 angeordnet, die als Randbereiche diejenigen Bestandteile 40 des Bauteils 10 darstellen, in denen ein zumindest teilweise gesintertes Inneres 46 von einer Umhüllung 44 umschlossen ist. Dabei ist ein Abstand A zweier paralleler Außenflächen, im Ausführungsbeispiel zwischen den beiden Oberflächen 26, 32, ermittelbar, welcher vorzugsweise im Bereich zwischen 0,9 mm und 35 mm liegt. Die zur Umhüllung 44 senkrecht erfassbare Wanddicke B von Wandabschnitten 44a, 44b liegt in der Regel zwischen 0,3 mm bei insgesamt eher dünneren Randbereichen und bei etwa 5 mm bei insgesamt eher dickeren Randbereichen. Gemäß dem dritten Ausführungsbeispiel besteht das Innere nicht vollständig aus gesintertem Material. Zusätzlich ist im Inneren 46 eine Gitterstruktur 48 vorgesehen, mittels der die einander gegenüberliegenden Wandabschnitte 44a, 44b der Umhüllung 44 wechselseitig zur Erhöhung der Festigkeit der als Loslager ausgestalteten Haken 36 abgestützt sind. Das Gitter 48 kann regelmäßig oder unregelmäßig ausgestaltet sein.

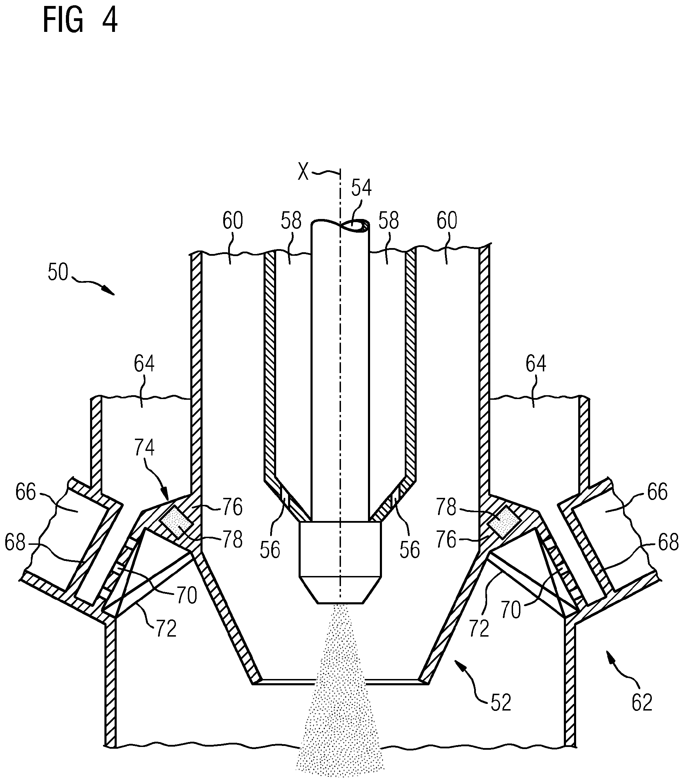

Figur 4 zeigt den Querschnitt durch einen Brenner 50 einer Gasturbinenbrennkammer als viertes Ausführungsbeispiel eines erfindungsgemäßen Bauteils 10. Der Brenner 50 umfasst als erfindungsgemäßes Bauteil einen Pilotbrenner 52 mit einem ersten Brennstoffkanal 54, eine Düse 56, einen Pilotgaskanal 58 und einen zentralen Luftkanal 60. Weiter umfasst der Brenner 50 einen Hauptbrenner 62 mit einem Hauptgaskanal 64, einem äußeren Luftkanal 66 sowie Düsenrohre 68 mit Brennstoffdüsen 70.

Der Pilotbrenner 52 ist symmetrisch aufgebaut in Bezug auf seine zentrale Achse X und ausgeführt als Diffusionsbrenner. Der erste Brennstoffkanal 54 ist zentral innerhalb der Anordnung angeordnet. Der erste Brennstoffkanal 54 ist umgeben von dem Pilotgaskanal 58, welcher konzentrisch dazu und zu der zentralen Achse X angeordnet ist. Der Pilotgaskanal 58 ist von dem zentralen Luftkanal 60 ebenso umgeben. Beide Kanäle 58 und 60 sind konzentrisch zu dem Flüssigbrennstoffkanal 54 angeordnet.

Der Hauptbrenner 62 ist als Vormischbrenner ausgeführt und umgibt den Pilotbrenner 52 konzentrisch, auch in Bezug auf die zentrale Achse A. Der Hauptgaskanal 64 des Hauptbrenners 62 ist konzentrisch zur zentralen Achse A und geht in Düsenrohre 68 über, welche sich durch den äußeren Luftkanal 66 erstrecken. In den Düsenrohren 68 sind Brennstoffdüsen 70 zum Einspritzen des Hauptbrennstoffs in den Luftstrom vorgesehen. Im Luftkanal 66 vorgesehene Drallgitter 72 verwirbeln und vermischen den Hauptbrennstoff und die Luft miteinander, bevor die Mixtur in die Verbrennungsflamme einströmt.

Aufgrund seiner geometrischen Gestalt besitzt der Brenner 50 einen konzentrischen Ring 74, welcher bisher fertigungsbedingt massiv ausgestaltet war. Mithilfe der Erfindung ist es nun möglich, diesen ringförmigen Bestandteil bei einem durch selektives Laserschmelzen hergestellten Brenner 50 schneller und mit geringerem Ressourcenverbrauch herzustellen, indem darin - wie in Figur 4 dargestellt - ein von einer Umhüllung 76 umschlossener Innenraum 78 bereitgestellt wird, der zumindest teilweise von einem Pulver oder zumindest teilweise von einem gesinterten Material ausgefüllt ist.

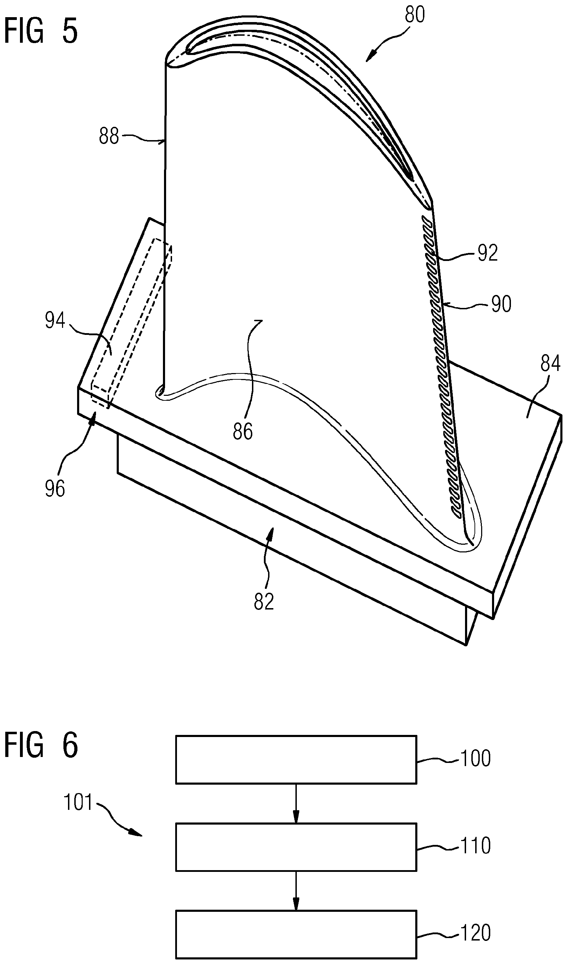

Figur 5 zeigt in einer perspektivischen Darstellung eine Turbinenlaufschaufel 80 mit einem Schaufelfuß 82, einer Plattform 84 sowie einem aerodynamisch gekrümmten Schaufelblatt 86. Letzteres erstreckt sich von einer Vorderkante 88 zu einer Hinterkante 90, neben der eine Vielzahl von Kühlluftlöchern 92 druckseitig münden. Beispielsweise längs des stromaufwärtigen Plattformrands kann das von einer Umhüllung 96 umschlossene Innere 94 vorgesehen sein, welches zumindest teilweise von einem Pulver oder zumindest teilweise von einem gesinterten Material ausgefüllt ist.

Figur 6 zeigt ein Verfahren 101 zum Herstellen des Bauteils 10. In einem ersten Herstellungsschritt 100 wird das Bauteil 10 durch selektives Laserschmelzen hergestellt. Das Bauteil 10 weist dann zumindest einen Bestandteil auf, der ein von einer lasergeschmolzenen massiven Umhüllung 44 zumindest teilweise, vorzugsweise größtenteils, insbesondere vollständig umgebenes Inneres 46 aufweist. In einem zweiten Schritt 110 wird das Bauteil 10 nach dem Abschluss des selektiven Laserschmelzens thermisch behandelt, beispielsweise spannungsarmgeglüht. Dabei wird nach Abschluss des selektiven Laserschmelzens und vor der Durchführung des zweiten Schrittes 110 das von der Umhüllung zumindest teilweise, vorzugsweise größtenteils, insbesondere vollständig umgebene Pulver zumindest in signifikantem Umfang, vorzugsweise vollständig, im Inneren belassen, während bei der Durchführung des Schrittes 110 dem Bauteil 10 derart viel Energie zugeführt wird, dass das belassene Pulver gesintert wird.

Optional kann danach das Bauteil 10 ggf. weiteren Herstellungsschritten 120 wie z.B. dem lokalen Beschichten mit einer oder mehreren metallischen Oxidschichten und/oder keramischen Wärmedämmschichten oder dergleichen unterzogen werden.

## Patentansprüche

1. Bauteil (10), insbesondere für eine thermische Strömungsmaschine,
umfassend zumindest einen Bestandteil (40), vorzugsweise mehrere Bestandteile (40), die ein von einer durch selektives Laserschmelzen hergestellten massiven Umhüllung (44, 76, 96) zumindest teilweise, vorzugsweise größtenteils, insbesondere vollständig umgebenes Inneres (46, 78, 94) aufweist,
welches Innere (46, 78, 94) ein Metallpulver enthält und/oder zumindest teilweise gesintert ist.

2. Bauteil (10) nach Anspruch 1,
bei dem im Inneren (46, 78, 94) ein lasergeschmolzenes Gitter (48) vorgesehen ist, welches mit der Umhüllung (44, 76, 96) lasergeschmolzen ist.

3. Bauteil (10) nach Anspruch 1 oder 2,
welches
einen Grundkörperabschnitt (42) zur Erfüllung einer Grundfunktion des Bauteils (10) und
als Bestandteil (40) einen Randbereich (41) umfasst, wobei der Randbereich an den Grundkörperabschnitt (42) monolithisch angrenzt und
zur lösbaren Befestigung des Bauteils (10) an einer Tragstruktur vorgesehen und/oder
zur Bildung eines Dichtungspartners einer Dichtungsanordnung ausgestaltet ist.

4. Bauteil (10) nach Anspruch 3,
bei dem der Randbereich (41) zwei parallele Außenflächen umfasst, deren senkrechter Abstand zwischen 0,9 mm und 35 mm liegt.

5. Bauteil (10) nach Anspruch 3 oder 4,
bei dem die Umhüllung (44, 76, 96) eine senkrecht zur Außenfläche erfassbare Wanddicke (A) aufweist, die in der Regel zwischen 0,3 mm und 5 mm liegt.

6. Bauteil (10) nach einem der Ansprüche 1 bis 5,
bei dem das Innere (44, 76, 96) eine Steifigkeit von etwa 5% bis etwa 90 % eines materialidentischen Vergleichsbauteils besitzt, dessen analoger Bestandteil (40) ohne ein gesintertes Inneres (46, 78, 94) ausgestaltet ist.

7. Bauteil (10) nach einem der vorigen Ansprüche, ausgestaltet als Turbinenleitschaufel, als Turbinenlaufschaufel, als Hitzeschild (47) einer Brennkammer oder einer Turbine oder als weiteres Brennkammer-Bauteil (50).

8. Verfahren (101) zum Herstellen eines Bauteils (10), umfassend die Schritte:
a) Herstellen (100) des Bauteils (10) durch selektives Laserschmelzen mit zumindest einem Bestandteil, das ein von einer lasergeschmolzenen massiven Umhüllung (44, 76, 96) zumindest teilweise, vorzugsweise größtenteils, insbesondere vollständig umgebenes Inneres (46, 78, 94) aufweist,
b) thermisches Behandeln (110) des Bauteils nach dem Abschluss des selektiven Laserschmelzens,
**gekennzeichnet durch** die Schritte,
dass nach Abschluss des selektiven Laserschmelzens und vor der Durchführung des Schrittes b) das von der Umhüllung zumindest teilweise, vorzugsweise größtenteils, insbesondere vollständig umgebene Pulver zumindest in signifikantem Umfang, vorzugsweise vollständig, im Inneren belassen wird, und
dass während der Durchführung des Schrittes b) dem Bauteil (10) derart viel Energie zugeführt wird, dass das belassene Pulver gesintert wird.

9. Verfahren nach Anspruch 8 zum Herstellen eines Bauteils (10) nach einem der Ansprüche 1 bis 7.
